# EUROPÄISCHE PATENTANMELDUNG

(11) **EP 3 838 085 A1**
(43) Veröffentlichungstag der Anmeldung: **23.06.2021**
(21) Anmeldenummer: 19217275.7
(22) Anmeldetag: 18.12.2019
(51) Int. Cl.: A47J 37/06, A47J 37/07

(54) **ELEKTRISCHES GRILLGERÄT**

(71) Anmelder: Severin Elektrogeräte GmbH, 59846 Sundern (DE)
(72) Erfinder: Gerke, Hans-Josef, 59846 Sundern (DE); Lu, David, Shajing, Boan, Shenzhen, PRC (CN)
(74) Vertreter: Köchling, Conrad-Joachim

(57) **Zusammenfassung**

Die Erfindung betrifft ein elektrisches Grillgerät, bestehend aus einem Gehäuse (1) mit Tropfschale (2), oberhalb der Tropfschale (2) angeordneten elektrischen Heizkörpern (3,4) zum Erhitzen des Grillgutes, einem Grillrost (5) und einer Anschlusseinrichtung (6) mittels derer der eine Heizkörper (3,4) leistungsregelbar ist, wobei zudem ein Temperaturfühler (9) am Gehäuse (1) installiert ist, der an die Leistungsregelung (6) angeschlossen ist, wobei das Gehäuse (1) einen Deckel (10) aufweist, wobei an die Leistungsregelung (6) der Anschlusseinrichtung ein Schalter (11) angeschlossen ist, der am Gehäuse (1) installiert ist und der mit einem im Deckel (10) installierten Betätigungsteil (12) zusammenwirkt, in dem der Schalter (11) bei in Öffnungslage befindlichem Deckel (10) unbetätigt ist und die Leistungsregelung vom Schalter (11) nicht beeinflusst ist und in dem der Schalter (11) bei in Schließlage befindlichem Deckel (10) vom Betätigungsteil (12) betätigt ist und den mindestens einen Heizkörper (3,4) abschaltet oder die Leistung des Heizkörpers (3,4) durch die Leistungsregelung (6) so begrenzt.

## Beschreibung

Die Erfindung betrifft ein elektrisches Grillgerät, bestehend aus einem oben offenen Gehäuse mit einer Tropfschale zum Aufnehmen von vom Grillgut abtropfenden Säften und zur Aufnahme von Wasser, mindestens einem oberhalb der Tropfschale angeordneten elektrischen Heizkörper zum Erhitzen des Grillgutes, einem den Heizköper überdeckenden Grillrost oder dergleichen Grillgutträger, wobei am Gehäuse eine Anschlusseinrichtung angeordnet ist, die an ein Stromnetz anschließbar ist und mittels derer der mindestens eine Heizkörper leistungsregelbar ist, wobei zudem ein Temperaturfühler am Gehäuse installiert ist und in das Gehäuse hineinragt, der an die Leistungsregelung angeschlossen ist, wobei das Gehäuse einen Deckel aufweist, der in eine Öffnungslage und eine Schließlage verbringbar ist, in der die Grillfläche des Gehäuses freiliegt oder überdeckt ist.

Derartige Grillgeräte sind im Stand der Technik bekannt. Eine besondere Problematik ergibt sich daraus, dass beim Betrieb eines solchen Grillgerätes und bei geschlossenem Deckel, was für unterschiedliche Garoperationen erwünscht ist, die Temperaturen an der Außenseite des Deckels auf ein unzulässig hohes Maß ansteigen. So darf beispielsweise bei einem Grillgerät mit Kunststoffgehäuse die Außentemperatur der Außenhaut eine Temperatur von ca. 90 °C nicht überschreiten. Bei einem Grillgerät aus Metall darf die Temperatur der Außenhaut 70 °C nicht überschreiten. Für den Anwender ist es praktisch nicht überwachbar und nicht feststellbar, ob er sich innerhalb des erlaubten Toleranzfeldes oder darüber hinaus bewegt, sodass ständige Temperaturmessungen an der Außenhaut des Deckels stattfinden müssten, sofern der Deckel geschlossen ist. Bei geöffnetem Deckel ergibt sich diese Problematik nicht, da die von dem Heizkörper oder von den Heizköpern erzeugte Temperatur schadlos abfließen kann.

Das Gehäuse ist oben offen und wannenartig ausgebildet.

Ausgehend von diesem Stand der Technik liegt der Erfindung die Aufgabe zugrunde, ein elektrisches Grillgerät gattungsgemäßer Art zu schaffen, bei dem eine Überhitzung des Deckels, insbesondere dessen Außenseite, bei geschlossenem Deckel und betriebener Grillgeräte vermieden werden kann.

Zur Lösung dieser Aufgabe wird vorgeschlagen, dass an die Leistungsregelung der Anschlusseinrichtung ein Schalter angeschlossen ist, der im Gehäuse oder am Gehäuse installiert ist und der mit einem am Deckel oder im Deckel installierten Betätigungsteil zusammenwirkt, in dem der Schalter bei in Öffnungslage befindlichem Deckel unbetätigt ist und die Leistungsregelung vom Schalter nicht beeinflusst ist und in dem der Schalter bei in Schließlage befindlichem Deckel vom Betätigungsteil betätigt ist und den mindestens einen Heizkörper abschaltet oder die Leistung des Heizkörpers durch die Leistungsregelung so begrenzt, dass eine maximale zulässige Temperatur nicht überschritten wird.

Gemäß dieser Lösung ist einerseits am Gehäuse oder im Gehäuse ein Schalter angeordnet, der an die Leistungsregelung des oder der elektrischen Heizkörper angeschlossen ist. Normalerweise ist dieser Schalter geschlossen oder jedenfalls unbetätigt, sodass das elektrische Grillgerät in herkömmlicher Weise betrieben werden kann und die Heizkörper entsprechend eingestellt werden können.

Am Deckel befindet sich ein Gegenstück zu dem Schalter, welches den Schalter aktiviert beziehungsweise betätigt, wenn der Deckel sich in Schließlage befindet. In dieser Lage ist das am Deckel befindliche oder installierte Betätigungsteil so eingerichtet, dass es mit dem gehäusefesten Schalter die Leistungsregelung beeinflussbar ist. Sofern der Deckel geschlossen wird, wird entweder mittels der Kombination von Schalter und Betätigungselement der mindestens eine Heizkörper abgeschaltet oder aber vorzugsweise wird die Leistung des Heizkörpers durch die Leistungsregelung so begrenzt, dass eine maximal zulässige Temperatur nicht überschritten wird. Die Leistungsbegrenzung des Heizkörpers kann in der Weise erfolgen, dass bei betätigtem Schalter ein Regelsignal auf die Leistungsregelung übertragen wird, mittels dessen die Leistung unabhängig von der voreingestellten Leistung auf den maximal zulässigen Temperaturwert eingestellt wird. Es erfolgt also mittels des Schalters eine Regelung der Leistung des oder der elektrischen Heizkörper in dem gewünschten Umfang.

Vorzugsweise ist vorgesehen, dass im Deckel ein in Schließlage des Deckels dem mindestens einen Heizkörper zugewandter Reflektor angeordnet ist.

Um einerseits die Innenseite des Deckels in Schließlage gegenüber der Strahlungswärme des elektrischen Heizkörpers abzuschirmen, ist der Reflektor vorteilhaft. Des Weiteren ist der Reflektor vorteilhaft, weil hierdurch auch bei geschlossenem Deckel die Garung des Grillgutes positiv beeinflusst wird.

Eine mögliche Variante besteht darin, dass das Gehäuse aus Metall besteht.

Eine alternative Ausgestaltung besteht darin, dass das Gehäuse aus temperaturstabilem Kunststoff besteht.

Als Kunststoff kommt beispielsweise glasfaserverstärktes Polyamid in Betracht. Metallische Gehäuse sind häufig innenseitig emailliert.

Des Weiteren ist bevorzugt vorgesehen, dass der Deckel aus Metall besteht.

Besonders bevorzugt vorgesehen ist, dass der Deckel aus temperaturstabilem Kunststoff besteht.

Die Ausbildung aus Kunststoff führt dazu, dass insbesondere auch der Deckel relativ leichtgewichtig ist. Darüber hinaus lässt die Fertigung des Deckels aus Kunststoff vielfältige Gestaltungsmöglichkeiten zu, die bei aus Metall bestehenden Deckeln nicht möglich sind.

Des Weiteren ist bevorzugt vorgesehen, dass zwei elektrische Heizkörper im Gehäuse angeordnet sind.

Hierbei ist besonders bevorzugt vorgesehen, dass ein erster Heizkörper eine Leistung von 2000 Watt hat, die für eine maximale Temperatur von 300 °C bis 360 °C ausgelegt ist, und dass ein zweiter Heizkörper eine Leistung von 1000 Watt hat, sodass die Gesamtleistung für eine Temperatur von bis zu 500 °C ausgelegt ist, wobei der zweite Heizkörper mittels des Schalters in Schließlage des Deckels abgeschaltet ist.

Bei geöffnetem Deckel kann das elektrische Grillgerät demzufolge mit einer entsprechenden Leistung betrieben werden, mit der eine Temperatur von bis zu 500 °C erreichbar ist. Sofern der Deckel in Schließlage überführt wird, wird vorzugsweise der zweite Heizkörper mittels des Schalters abgeschaltet, sodass dieser an der Erwärmung nicht mehr teilnehmen kann. Die von dem ersten Heizkörper erzeugte Temperatur liegt bei ca. 300 °C bis 360 °C. Dies führt im Ergebnis dazu, dass beim Einsatz von Kunststoff die Außentemperatur des aus Kunststoff bestehenden Deckels 90 °C nicht überschreitet. Bei einer Ausführung des Deckels aus Metall wird hierdurch sichergestellt, dass die Außentemperatur an der Außenfläche des Deckels ca. 70 °C nicht übersteigt. Durch die entsprechende Ausgestaltung, insbesondere die Anordnung des Schalters, der durch den Deckel betätigt wird, wird sichergestellt, dass Fehlbedienungen durch den Benutzer weitestgehend auszuschließen sind.

Auch ist vorzugsweise vorgesehen, dass die Anschlusseinrichtung eine Anzeige für die am Leistungsregler eingestellte Temperatur aufweist.

Zudem kann vorgesehen sein, dass die Anschlusseinrichtung eine Anzeige für die durch den Temperaturfühler gemessene Temperatur aufweist.

Durch diese Ausgestaltung ist es für den Benutzer möglich, einerseits die eingestellte Temperatur zu erfassen und andererseits auch die tatsächlich durch den Temperaturfühler erfasste Temperatur zur Kenntnis zu bekommen.

Besonders bevorzugt ist vorgesehen, dass die Leistungsregelung der Anschlusseinrichtung eine elektronische Steuerung mit Speicherbaustein umfasst, wobei die Leistungsregelung durch ein Stellknopf, der an der Anschlusseinrichtung angebracht ist, durch berührungslose Stellglieder oder drahtlos erfolgt, wobei mittels der Steuerung die Leistungsschaltung, die Abschaltung und die Leistungsbegrenzung bei geschlossenem Deckel erfolgt.

Zudem ist hierbei vorgesehen, dass in dem Speicherbaustein eine voreingestellte Temperatur gespeichert ist, auf die der mindestens eine Heizkörper bei geschlossenem Deckel geregelt ist.

Hierdurch kann beispielsweise die maximal zulässige Temperatur für die Situation bei geschlossenem Deckel voreingestellt werden, sodass sie vom Benutzer nicht beeinflussbar ist. Sofern der Benutzer der elektrische Grillgerät benutzt und den Deckel schließt, so wird die Leistung des Heizkörpers oder der Heizkörper derart geregelt, dass die voreingestellte Temperatur, die der maximal zulässigen Temperatur entspricht, nicht überschritten wird.

Bevorzugt ist vorgesehen, dass der Schalter als kontaktloser Schalter oder Berührungsschalter (Sensorschalter) oder Magnetschalter ausgebildet ist.

Bei solchen Schaltern besteht keine Gefahr, dass die Schalter oder deren Elemente bei der Benutzung des Grillgerätes beschädigt werden oder abgebrochen werden. Insbesondere Magnetschalter sind hierbei vorteilhaft, weil diese gegen mechanische Beschädigungen unempfindlich sind und auch in dem entsprechenden Temperaturbereich des Grillgerätes keinen Schaden nehmen.

Vorzugsweise ist dabei vorgesehen, dass der Schalter im Gehäuse, verdeckt von einem Wandungsteil des Gehäuses eingebaut ist und das Betätigungsteil im Deckel, verdeckt von Deckelbestandteilen angeordnet ist.

Auch diese Maßnahme dient dazu, den Schalter und das Betätigungsteil vor mechanischen Beschädigungen zu schützen.

Vorzugsweise ist zudem vorgesehen, dass der Deckel am Gehäuse um eine Gehäuserandkante schwenkbar gehalten ist.

Hierdurch ist der Deckel unverlierbar am Gehäuse gehalten und kann ohne weiteres in die geöffnete Lage und in die Schließlage verstellt werden.

Hierbei ist bevorzugt vorgesehen, dass der Deckel am Gehäuse mittels eines Scharniers angelenkt ist.

Bevorzugt ist zudem vorgesehen, dass der Schalter und das Betätigungsteil in das Scharnier eingebaut ist.

Diese Einbausituation führt dazu, dass es für den Benutzer praktisch nicht möglich ist, den Schalter und/oder das Betätigungsteil zu manipulieren, da diese durch das Scharnier verdeckt und geschützt sind und der Benutzer keine Zugriffsmöglichkeit für eine Manipulation hat.

Ein bevorzugtes Verfahren zum Betriebs eines elektrischen Grillgerätes nach einem der vorhergehenden Gegenstandsansprüche wird darin gesehen, dass bei geöffnetem Deckel die Leistung mittels des Leistungsreglers eingestellt wird und die aktuelle Temperatur und/oder die eingestellte Zieltemperatur angezeigt wird, dass bei geschlossenem Deckel die Leistung entweder abgeschaltet wird oder auf eine in dem Speicherbaustein voreingestellte, gespeicherte maximale Leistung begrenzt wird.

Eine weitere Verbesserung wird darin gesehen, dass die Leistung, die bei geschlossenem Deckel begrenzt ist, nach dem erneuten Öffnen des Deckels entweder mittels des Leistungsreglers neu eingestellt wird oder auf die vor dem Öffnen des Deckels eingestellte Leistung automatisch wiederum eingestellt wird, welche in dem Speicherbaustein der elektronischen Steuerung gespeichert wird, bevor der Deckel geschlossen wird.

Zudem ist vorgesehen, dass die tatsächliche Temperatur in dem Grillgerät erfasst und die erfassten Temperaturwerte in den Speicherbaustein eingelesen werden, dort mit eingestellten Temperaturwerten verglichen werden und zur Leistungsregelung des Leistungsreglers benutzt werden.

Eine bevorzugte Verfahrensweise läuft derart ab, dass dann, wenn der Deckel geschlossen wird, beispielsweise ein in den Speicherbaustein hinterlegter Temperaturwert Vorrang gegenüber dem eingestellten Temperaturwert hat, sodass die Temperatur des Grillgerätes nur so ansteigen kann, dass eine Gefahr der Überhitzung vermieden ist. Für diesen Fall könnte beispielswese ein Heizkörper der beiden Heizkörper ausgeschaltet werden. Es könnten aber auch beide Heizkörper oder sofern nur ein Heizkörper vorgesehen ist, dieser ausgeschaltet werden, wobei die Einstellung der Leistung der Heizkörper durch den abgelegten Temperaturwert in dem Speicherbaustein geregelt wird.

Somit stellt sich dann, wenn der Deckel sich in Schließlage befindet, die voreingestellte Temperatur auf den gespeicherten Sollwert ein. Nach dem Öffnen des Deckels bleibt dieser Sollwert eingestellt. Wahlweise muss der Benutzer dann manuell die Leistungsregelung der Heizkörper erneut vornehmen.

Alternativ könnte aber auch die im Speicherbaustein voreingestellte Temperatur bei geschlossenem Deckel eingestellt werden und nach dem Öffnen des Deckels erneut die früher voreingestellte Temperatur erreicht werden, sofern im Speicherbaustein eine entsprechende Speicherung des früher eingestellten Temperaturwertes erfolgt ist.

Als Temperaturfühler kann vorzugsweise ein NTC-Fühler vorgesehen sein, der schnell reagiert und eine schnelle Regelung der Temperatur bei geschlossenem Deckel ermöglicht.

Ausführungsbeispiele der Erfindung sind in der Zeichnung dargestellt und im Folgenden näher beschrieben.

Es zeigt:
- Fig. 1: ein elektrisches Grillgerät in Ansicht bei teilweise geöffnetem Deckel;
- Fig. 2: eine Variante in Seitenansicht bei geöffnetem Deckel.

In der Zeichnung ist ein elektrisches Grillgerät gezeigt, welches aus einem Gehäuse 1 mit einer Tropfschale 2 zum Aufnehmen von vom Grillgut abtropfenden Säften und zur Aufnahme von Wasser zeigt. Oberhalb der Tropfschale 2 sind im Ausführungsbeispiel zwei elektrische Heizkörper 3,4 im Gehäuse 1 angeordnet, die zum Erhitzen des Grillgutes dienen. Ferner ist ein die Heizkörper 3,4 überdeckender Grillrost 5 gezeigt. Am Gehäuse 1 ist eine Anschlusseinrichtung 6 angeordnet, die über ein Kabel 7 an ein Stromnetz angeschlossen werden kann. Mittels dieser Anschlusseinrichtung können die Heizkörper leistungsgeregelt werden, wozu im Ausführungsbeispiel an der Anschlusseinrichtung ein Drehknopf 8 vorgesehen ist, über den die Einschaltung und Regelung der Leistung der beiden Heizkörper 3,4 erfolgt.

Des Weiteren ist ein Temperaturfühler 9, vorzugsweise ein NTC-Element, vorgesehen, mittels dessen die Temperatur im Grillgerät erfasst wird.

Das Gehäuse 1 weist einen Deckel 10 auf, der in eine Öffnungslage und eine Schließlage verbringbar ist. In der Zeichnungsfigur 1 ist die halbgeöffnete Stellung gezeigt, während in der Zeichnungsfigur 2 die ganz geöffnete Stellung des Grillgerätes gezeigt ist.

Erfindungsgemäß ist an die Leistungsregelung der Anschlusseinrichtung 6 ein Schalter 11 angeschlossen, der im Gehäuse 1 installiert ist. Dieser Schalter wirkt mit einem am Deckel 10 installierten Betätigungsteil 12 zusammen. Hierdurch ist der Schalter 11 bei in Öffnungslage befindlichem Deckel 10 unbetätigt und von dem Betätigungsteil 12 unbeeinflusst. Sofern der Deckel 10 in die Schließlage überstellt wird, wird die Leistungsregelung der elektrischen Heizkörper 3,4 des Grillgerätes beeinflusst, indem beispielsweise ein Heizkörper abgeschaltet wird oder die Leistung beider Heizkörper durch eine voreingestellte Leistungsregelung begrenzt wird, damit eine maximal zulässige Temperatur nicht überschritten wird, die zu einer unerwünscht hohen Temperatur an der Außenseite des Deckels 10 führen würde.

Im Deckel 10 ist ein in Schließlage des Deckels 10 den Heizkörpern 3,4 zugewandter Reflektor 13 angeordnet. Das Gehäuse 1 besteht vorzugsweise aus Metall oder auch als temperaturstabilem Kunststoff. Der Deckel 10 besteht ebenfalls entweder aus Metall oder vorzugsweise aus temperaturstabilem Kunststoff. Beispielsweise und vorzugsweise kann der Deckel 10 aus glasfaserverstärkten Polyamid bestehen. Durch den Einsatz von Kunststoff ist die Gestaltungsvielfalt erhöht und das Gewicht des Grillgerätes erleichtert.

In einer bevorzugten Ausführungsform ist beispielsweise der erste Heizkörper 3 auf eine Heizleistung von 2000 Watt ausgelegt, die für eine maximale Temperatur von ca. 300 °C bis 360 °C ausreicht. Die Regelung kann also von 0 °C bis ca. 360 °C erfolgen. Der zweite Heizkörper 4 ist zur Verstärkung der Heizleistung vorgesehen, sodass dann eine höhere Heizleistung von insgesamt 3000 Watt aufgebracht werden kann, die für eine Temperatur von bis zu 500 °C ausreicht. Vorzugsweise ist die Anordnung so getroffen, dass der zweite Heizkörper 4 mittels des Schalters 11 bei in Schließlage befindlichem Deckel 10 abgeschaltet ist.

Die Anschlusseinrichtung 6 kann eine nummerische Anzeige für die am Leistungsregler eingestellte Temperatur aufweisen und/oder eine nummerische Anzeige für die durch den Temperaturfühler 9 tatsächlich gemessene Temperatur.

Die Leistungsregelung der Anschlusseinrichtung 6 umfasst eine elektronische Steuerung mit Speicherbaustein, wobei die Leistungsregelung beispielsweise durch einen Stellknopf 8 an der Anschlusseinrichtung 6 vorgenommen werden kann.

In welcher Form die Betätigung der Leistungsregelung erfolgt, ist im Grunde gleichgültig, wobei sowohl berührungslose Stellglieder als auch drahtlose Betätigung erfolgen kann.

Mittels der vorgesehenen Steuerung erfolgt die Leistungsschaltung, die Abschaltung und die Leistungsbegrenzung bei geschlossenem Deckel 10.

In dem Speicherbaustein kann zum Beispiel eine voreingestellte maximale Temperatur gespeichert sein, auf welche der bei geschlossenem Deckel im Betrieb befindliche Heizkörper 3 oder 4 geregelt ist. Diese voreingestellte Temperatur ist vom Benutzer nicht variierbar, sondern vom Hersteller fest eingespeichert.

Der Schalter 11 kann als kontaktloser Schalter oder Berührungsschalter (Sensorschalter) oder auch als Magnetschalter ausgebildet sein, wobei das Betätigungsteil entsprechende ausgelegt ist, also zur Kommunikation mit dem Schalter 11 ausgelegt und bestimmt ist. Wie in Figur 4 gezeigt, ist der Schalter 11 im Gehäuse 1 verdeckt von Wandungsteilen des Gehäuses eingebaut, während das Betätigungsteil 12 am Rand des Deckels 10 von Deckelbestandteilen verdeckt angeordnet oder eingebaut ist.

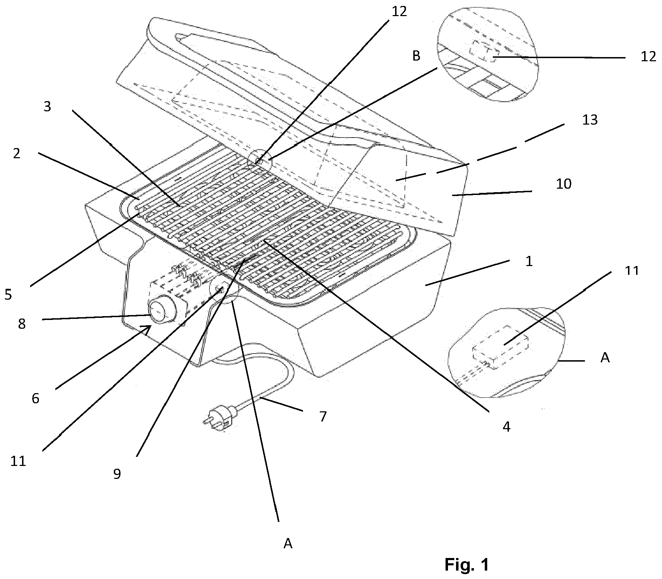

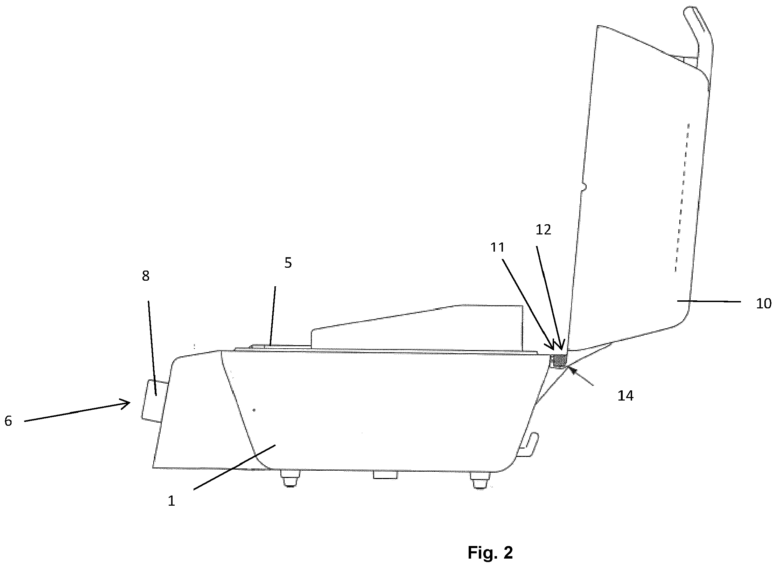

Der Deckel 10 ist am Gehäuse 1 um eine Gehäuserandkante schwenkbar gehalten, wie in Figur 1 und Figur 2 ersichtlich. Bei Figur 2 ist die Besonderheit, dass der Deckel 10 am Gehäuse 1 mittels Scharnieres 14 angelenkt ist. Diese Besonderheit ermöglicht es, dass der Schalter 11 und das Betätigungsteil 12 lagerichtig in das Scharnier 14 eingebaut sind, sodass sie nicht manipulierbar sind, aber ihre Funktion gut erfüllen können.

Ein Verfahren zum Betrieb des elektrischen Grillgerätes verläuft im Wesentlichen wie folgt ab:
Bei geöffnetem Deckel 10 wird die Leistung der elektrischen Heizköper 3,4 mittels des Leistungsreglers 6 eingestellt und gegebenenfalls die aktuelle Temperatur und/oder auch die eingestellte Zieltemperatur wird an dem Leistungsregler angezeigt. Bei geschlossenem Deckel 10 wird die Leistung der Heizkörper abgeschaltet, diese also stromlos gestellt oder die Leistung der elektrischen Heizkörper 3,4 wird auf eine in dem Speicherbaustein voreingestellte gespeicherte maximale Leistung begrenzt. Es ist damit erreicht, dass sich die Außenhaut des Deckels 10 nicht über die zulässige Temperatur erwärmt.

Vorzugsweise ist die Leistung, die bei geschlossenem Deckel 10 begrenzt ist, nach dem erneuten Öffnen des Deckels 10 mittels des Leistungsreglers 6 neu einstellbar, da dieser die voreingestellte Temperatur nicht speichert. Alternativ kann die vor dem Öffnen des Deckels 10 eingestellte Leistung (Temperatur) in dem Speicherbaustein gespeichert werden, sodass die vor dem Öffnen des Deckels 10 eingestellte Temperatur im Speicherbaustein abgelegt und gespeichert wird. In diesem Falle kann dann die Leistung wieder entsprechend automatisch angehoben werden, wenn der Deckel 10 geöffnet wird, in dem die vor dem Öffnen des Deckels 10 eingestellte Leistung wieder abgerufen wird.

Im Übrigen wird die tatsächliche Temperatur in dem Grillgerät durch entsprechende Messfühler 9 erfasst und die erfassten Temperaturwerte können in den Speicherbaustein eingelesen werden und dort mit eingestellten Temperaturwerten verglichen werden, wobei sie damit zur Leistungsregelung des Leistungsreglers benutzt werden.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

### Bezugszeichenliste:

- 1: Gehäuse
- 2: Tropfschale
- 3: erster Heizkörper
- 4: zweiter Heizkörper
- 5: Grillrost
- 6: Anschlusseinrichtung
- 7: Leitung
- 8: Reglerknopf
- 9: Temperaturfühler
- 10: Deckel
- 11: Schalter
- 12: Betätigungsteil
- 13: Reflektor
- 14: Scharnier

## Patentansprüche

1. Elektrisches Grillgerät, bestehend aus einem oben offenen Gehäuse (1) mit einer Tropfschale (2) zum Aufnehmen von vom Grillgut abtropfenden Säften und zur Aufnahme von Wasser, mindestens einem oberhalb der Tropfschale (2) angeordneten elektrischen Heizkörper (3,4) zum Erhitzen des Grillgutes, einem den Heizköper (3,4) überdeckenden Grillrost (5) oder dergleichen Grillgutträger, wobei am Gehäuse (1) eine Anschlusseinrichtung (6) angeordnet ist, die an ein Stromnetz anschließbar ist und mittels derer der mindestens eine Heizkörper (3,4) leistungsregelbar ist, wobei zudem ein Temperaturfühler (9) am Gehäuse (1) installiert ist und in das Gehäuse hineinragt, der an die Leistungsregelung (6) angeschlossen ist, wobei das Gehäuse (1) einen Deckel (10) aufweist, der in eine Öffnungslage und eine Schließlage verbringbar ist, in der die Grillfläche des Gehäuses (1) freiliegt oder überdeckt ist, **dadurch gekennzeichnet, dass** an die Leistungsregelung (6) der Anschlusseinrichtung ein Schalter (11) angeschlossen ist, der im Gehäuse (1) oder am Gehäuse (1) installiert ist und der mit einem am Deckel (10) oder im Deckel (10) installierten Betätigungsteil (12) zusammenwirkt, in dem der Schalter (11) bei in Öffnungslage befindlichem Deckel (10) unbetätigt ist und die Leistungsregelung vom Schalter (11) nicht beeinflusst ist und in dem der Schalter (11) bei in Schließlage befindlichem Deckel (10) vom Betätigungsteil (12) betätigt ist und den mindestens einen Heizkörper (3,4) abschaltet oder die Leistung des Heizkörpers (3,4) durch die Leistungsregelung (6) so begrenzt, dass eine maximale zulässige Temperatur nicht überschritten wird.

2. Elektrisches Grillgerät nach einem Anspruch 1, **dadurch gekennzeichnet, dass** im Deckel (10) ein in Schließlage des Deckels (10) dem mindestens einen Heizkörper (3,4) zugewandter Reflektor (13) angeordnet ist.

3. Elektrisches Grillgerät nach einem der Ansprüche 1 oder 2, **dadurch gekennzeichnet, dass** das Gehäuse (1) aus Metall besteht.

4. Elektrisches Grillgerät nach einem der Ansprüche 1 oder 2, **dadurch gekennzeichnet, dass** das Gehäuse (1) aus temperaturstabilem Kunststoff besteht.

5. Elektrisches Grillgerät nach einem der Ansprüche 1 bis 4, **dadurch gekennzeichnet, dass** der Deckel (10) aus Metall besteht.

6. Elektrisches Grillgerät nach einem der Ansprüche 1 bis 4, **dadurch gekennzeichnet, dass** der Deckel (10) aus temperaturstabilem Kunststoff besteht.

7. Elektrisches Grillgerät nach einem der Ansprüche 1 bis 6, **dadurch gekennzeichnet, dass** zwei elektrische Heizkörper (3,4) im Gehäuse (1) angeordnet sind.

8. Elektrisches Grillgerät nach einem Anspruch 7, **dadurch gekennzeichnet, dass** ein erster Heizkörper (3) eine Leistung von 2000 Watt hat und dass ein zweiter Heizkörper (4) eine Leistung von 1000 Watt hat, wobei der zweite Heizkörper (4) mittels des Schalters (11) in Schließlage des Deckels (10) abgeschaltet ist.

9. Elektrisches Grillgerät nach einem der Ansprüche 1 bis 8, **dadurch gekennzeichnet, dass** die Anschlusseinrichtung (6) eine Anzeige für die am Leistungsregler eingestellte Temperatur aufweist.

10. Elektrisches Grillgerät nach einem der Ansprüche 1 bis 9, **dadurch gekennzeichnet, dass** die Anschlusseinrichtung eine Anzeige für die durch den Temperaturfühler (9) gemessene Temperatur aufweist.

11. Elektrisches Grillgerät nach einem der Ansprüche 1 bis 10, **dadurch gekennzeichnet, dass** die Leistungsregelung der Anschlusseinrichtung (6) eine elektronische Steuerung mit Speicherbaustein umfasst, wobei die Leistungsregelung durch ein Stellknopf, der an der Anschlusseinrichtung (6) angebracht ist, durch berührungslose Stellglieder oder drahtlos erfolgt, wobei mittels der Steuerung die Leistungsschaltung, die Abschaltung und die Leistungsbegrenzung bei geschlossenem Deckel (10) erfolgt.

12. Elektrisches Grillgerät nach einem Anspruch 11, **dadurch gekennzeichnet, dass** in dem Speicherbaustein eine voreingestellte Temperatur gespeichert ist, auf die der mindestens eine Heizkörper (3,4) bei geschlossenem Deckel geregelt ist.

13. Elektrisches Grillgerät nach einem der Ansprüche 1 bis 12, **dadurch gekennzeichnet, dass** der Schalter (11) als kontaktloser Schalter oder Berührungsschalter (Sensorschalter) oder Magnetschalter ausgebildet ist.

14. Elektrisches Grillgerät nach einem der Ansprüche 1 bis 13, **dadurch gekennzeichnet, dass** der Schalter (11) im Gehäuse (1), verdeckt von einem Wandungsteil des Gehäuses (1) eingebaut ist und das Betätigungsteil (12) im Deckel (10), verdeckt von Deckelbestandteilen angeordnet ist.

15. Elektrisches Grillgerät nach einem der Ansprüche 1 bis 14, **dadurch gekennzeichnet, dass** der Deckel (10) am Gehäuse um eine Gehäuserandkante schwenkbar gehalten ist.

16. Elektrisches Grillgerät nach einem der Ansprüche 1 bis 5, **dadurch gekennzeichnet, dass** der Deckel (10) am Gehäuse (1) mittels eines Scharniers (14) angelenkt ist.

17. Elektrisches Grillgerät nach einem Anspruch 16, **dadurch gekennzeichnet, dass** der Schalter (11) und das Betätigungsteil (12) in das Scharnier (14) eingebaut ist.

18. Verfahren zum Betrieb eines elektrischen Grillgerätes nach einem der Ansprüche 1 bis 17, **dadurch gekennzeichnet, dass** bei geöffnetem Deckel (10) die Leistung mittels des Leistungsreglers eingestellt wird und die aktuelle Temperatur und/oder die eingestellte Zieltemperatur angezeigt wird, dass bei geschlossenem Deckel (10) die Leistung entweder abgeschaltet wird oder auf eine in dem Speicherbaustein voreingestellte, gespeicherte maximale Leistung begrenzt wird.

19. Verfahren nach einem Anspruch 18, **dadurch gekennzeichnet, dass** die Leistung, die bei geschlossenem Deckel (10) begrenzt ist, nach dem erneuten Öffnen des Deckels (10) entweder mittels des Leistungsreglers neu eingestellt wird oder auf die vor dem Öffnen des Deckels (10) eingestellte Leistung automatisch wiederum eingestellt wird, welche in dem Speicherbaustein der elektronischen Steuerung gespeichert wird, bevor der Deckel (10) geschlossen wird.

20. Verfahren nach einem der Ansprüche 18 oder 19, **dadurch gekennzeichnet, dass** die tatsächliche Temperatur in dem Grillgerät erfasst und die erfassten Temperaturwerte in den Speicherbaustein eingelesen werden, dort mit eingestellten Temperaturwerten verglichen werden und zur Leistungsregelung des Leistungsreglers benutzt werden.
